# EUROPEAN PATENT SPECIFICATION

(11) **EP 2 749 410 B1**
(45) Date of publication and mention of the grant of the patent: **06.06.2018**
(21) Application number: 12811308.1
(22) Date of filing: 29.06.2012
(51) Int. Cl.: B32B 27/26, B32B 27/16, B32B 27/08, B32B 27/28, B32B 27/30, B32B 27/34, B32B 27/38, B32B 27/42, B32B 1/08, B32B 17/06, B32B 27/00, C03C 17/34, H01B 7/02, H01B 3/40, H01B 3/30, H01B 3/42

(54) **SELF-REPAIRING LAMINATED STRUCTURE AND SELF-BONDING INSULATED WIRE**
SELBSTREPARIERENDE SCHICHTSTRUKTUR UND SELBSTBINDENDER ISOLIERTER DRAHT
STRUCTURE STRATIFIÉE DOTÉE DE PROPRIÉTÉS AUTO-RÉPARATRICES, ET CONDUCTEUR ISOLÉ À AUTO-SOUDURE

(30) Priority: 08.07.2011 JP 2011151416
(43) Date of publication of application: 02.07.2014
(73) Proprietor: Hitachi, Ltd., Tokyo 100-8280 (JP)
(72) Inventor: ARAYA Kotaro, Chiyoda-ku Tokyo 100-8280 (JP); AMOU Satoru, Chiyoda-ku Tokyo 100-8280 (JP)
(74) Representative: Beetz & Partner mbB
(86) International application number: PCT/JP2012/066654
(87) International publication number: WO 2013/008646

(56) References cited:
- EP-A1- 0 120 606
- JP-A- 7 040 491
- JP-A- 9 092 040
- JP-A- 2003 031 063
- JP-A- 2011 005 766
- JP-A- 2011 518 056
- US-A- 4 127 695
- US-A- 4 643 944

## Description

### Technical Field

The present invention relates to a self-healing laminated structure and a self-fusing insulated wire.

### Background Art

In preparation for recent environmental problems, for example, prevention of global warming and reduction and recycling of waste, the products with less environmental burden are increasingly used. More specifically, as seen in the application of naturally-derived materials and the recycling of PET bottles, efforts to the reduction of environmental burden from the entry to the exit of products have been made. In such flow of products, from the viewpoint of using a product, it goes without saying that lifetime improvement of the products leads to a reduction of environmental burden.

Towards lifetime improvement of products, for example, seeing resin materials, there is also a method to improve the strength of the resin material itself, and also a method to provide a resin material with a self-healing property. As a latter method, as seen in PTL 1, a method of encapsulating a self-healing agent and embedding the self-healing agent in a resin material has been known, and lifetime improvement of the resin materials is sought.

In PTL 2 describes a self-bonding enameled wire having an electric insulation layer coated thereon and a bonding layer coated over the insulation layer. In PTL 3 a method of insulating electromagnetic coils is described, comprising coating an electromagnetic coil with epoxy resin containing a cross linking agent consisting essentially of an acid anhydride, the coil having a bonding layer consisting of epoxy resin, the epoxy resin containing a cross linking agent being cross linked by heating. PTL 4 discloses a pre-formed flexible transparent polymer sheet for use as ply in an automotive glazing laminate, the laminate comprising a glass sheet, a thermoplastic polyurethane adhesive layer and a thermoset polyurethane layer.

### Citation List

### Patent Literature

PTL 1: JP 7-40491 A
PTL 2: EP 0 120 606 A1
PTL 3: US 4, 127, 695
PTL 4: US 4, 643, 944

### Summary of Invention

### Technical Problem

Incidentally, in the self-healing laminated structure using a capsule described above, there are disadvantages that the capsule containing a healing material is expensive, and also that the process of dispersing the capsule is also required, thus there are many practical problems. In addition, the subject of the self-healing is also limited to delamination in a fiber reinforced plastic, based on its healing process and the size of the capsule.

It is thought that the range of application of resin material products that require lifetime improvement, particularly, electric product using a resin material, is widespread. A familiar example is a response to self-healing of general cracks such as cracks on the surface of electric product on which a resin material is applied. In addition, in electric product using winding wire, an example is a response to self-healing of cracks in a self-fusing insulated wire used in electric product in severe usage environment.

Specifically, crack generation by an electric transformer and vibration of a rotary motor is a major problem such that leads directly to product lifetime. It is considered that the applicable resin material products are widespread, such as electronic equipment such as a cell phone, electric product such as a refrigerator and a washing machine, furthermore, a drive motor such as automobile, and wind power generator, thus, needs of a self-healing resin material are big.

An object of the invention is to provide a laminated structure excellent in self-healing property that can be prepared by a cheap and simple method, and to provide a self-fusing insulated wire using the same and electric product using the electric insulated wire.

The novel characteristics of the invention will be apparent from the description of the present specification and the accompanying drawings.

### Solution to Problem

The present invention is achieved as set out in the independent claims. The disclosure provides a self-healing laminated structure in which a self-healing resin layer is formed on a base material and a thermosetting resin top coat is formed on an outer layer thereof, wherein the self-healing resin layer includes an uncured cross-linkable or curable thermoplastic resin, and the thermosetting resin top coat includes a cross-linking agent, curing agent or curing catalyst of the cross-linkable thermoplastic resin.

Further, the disclosure provides the self-fusing insulated wire in which a self-healing resin layer is formed on a conductor and an uncured self-fusing thermosetting resin top coat is formed on an outer layer thereof, wherein the self-healing resin layer includes an uncured cross-linkable or curable thermoplastic resin, and the thermosetting resin top coat includes a cross-linking agent, curing agent or curing catalyst of the cross-linkable thermoplastic resin.

### Advantageous Effects of Invention

According to the invention, a laminated structure excellent in self-healing property that can be prepared by a cheap and simple method can be provided, and a self-fusing insulated wire using the same and electric product can be provided.

### Brief Description of Drawings

[FIG. 1] FIG. 1 is a cross-sectional view illustrating an example of a self-healing laminated structure according to the invention.
[FIG. 2] FIG. 2 is a cross-sectional view illustrating another example of a self-healing laminated structure according to the invention.
[FIG. 3] FIG. 3 is a cross-sectional view illustrating an example of a self-fusing insulated wire according to the invention.
[FIG. 4] FIG. 4 is a cross-sectional view illustrating a comparative example of a laminated structure according to the invention.
[FIG. 5] FIG. 5 is a cross-sectional view illustrating a comparative example of a self-fusing insulated wire according to the invention.
[FIG. 6A] FIG. 6A is a cross-sectional view describing self-healing of a laminated structure according to the invention and the comparative example.
[FIG. 6B] FIG. 6B is a cross-sectional view describing self-healing of a laminated structure according to the comparative example.
[FIG. 6C] FIG. 6C is a cross-sectional view describing self-healing of a laminated structure according to the invention.
[FIG. 7A] FIG. 7A is a cross-sectional view describing self-healing of a laminated structure according to the invention.
[FIG. 7B] FIG. 7B is a cross-sectional view describing self-healing of a laminated structure according to the invention.

### Description of Embodiments

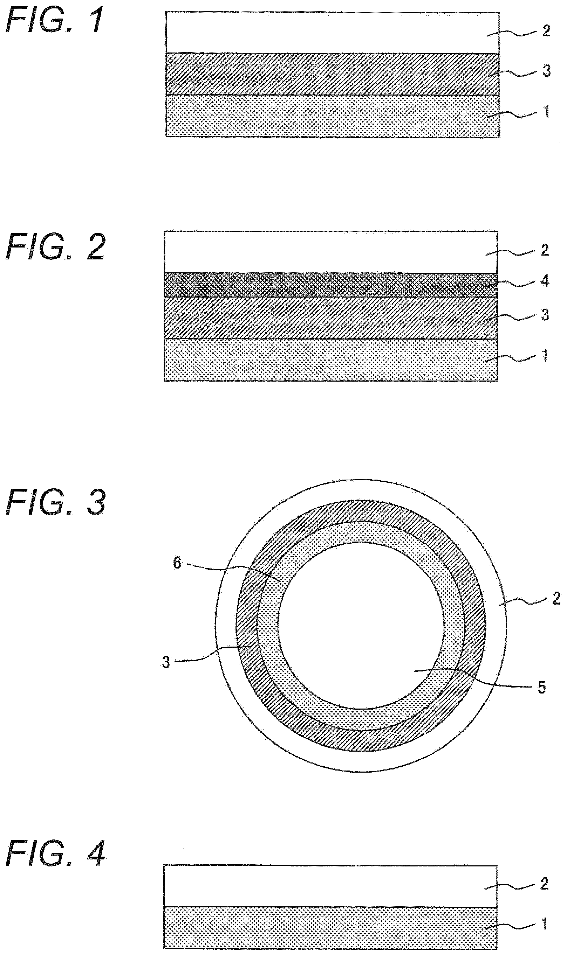

Herein below, the invention will be described in detail along with embodiments (Examples) with reference to the drawings. FIG. 1 is a schematic view for describing an outline constitution of the self-healing laminated structure according to the invention. A self-healing resin layer 3 is provided on a base material 1, and a thermosetting resin layer 2 (top coat) is provided on an upper layer thereof. FIG. 4 is a laminated structure when there is no self-healing resin layer shown herein. The thicknesses of the self-healing resin layer 3 and the thermosetting resin layer 2 formed on the upper layer thereof are each preferably 10 to 100 µm.

FIG. 2 is a schematic view for describing an outline constitution of the self-healing laminated structure according to the invention. The self-healing resin layer 3 is provided on the base material 1, and the thermosetting resin layer 2 is provided on an upper layer thereof. Furthermore, a barrier layer 4 is provided between the self-healing resin layer and the thermosetting resin layer.

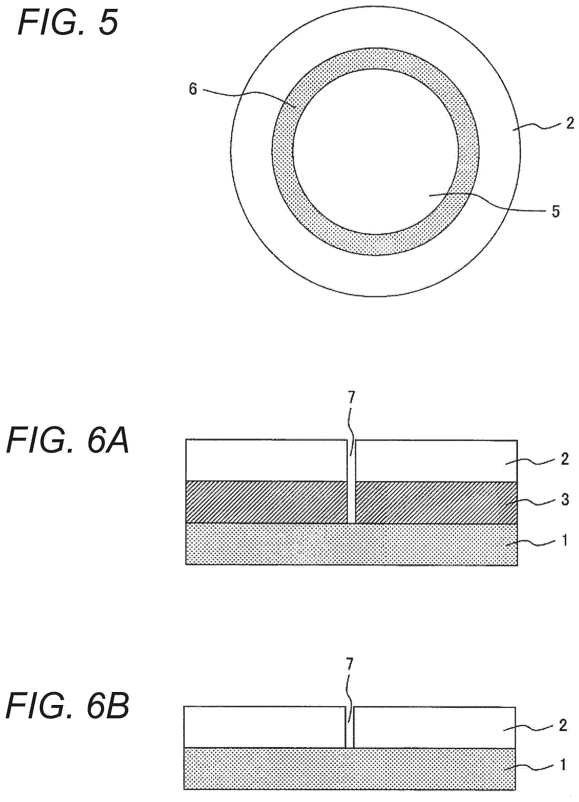

FIG. 3 is an illustration of an outline constitution of a self-fusing insulated wire using the self-healing laminated structure according to the invention. An insulation film layer 6 is formed on a conductor 5, furthermore, the self-healing resin layer 3 is provided on an upper layer thereof, and the thermosetting resin layer 2 is provided on an upper layer thereof. FIG. 5 is a self-fusing insulated wire when there is no self-healing resin layer shown herein.

The material of the base material according to the invention is not particularly limited so long as it is a solid such as plastic, glass, metal or ceramics. In addition, the material may be a base material in which these materials are mixed. A shape of the base material according to the invention is not also particularly limited so long as it can be coated with a laminated structure such as a planar, linear, block or spherical shape.

The thermosetting resin used in the thermosetting resin layer according to the invention includes epoxy resins, phenoxy resins, acrylate resins, phenol resins, melamine resins, thermosetting polyimide, and the like. Among them, phenoxy resins are preferable as a thermosetting resin for a self-fusing insulated wire. Among phenoxy resins, bisphenol A and bisphenol S phenoxy resins are particularly preferable. The thermosetting resin layer (top coat) according to the invention may contain a curing agent, cross-linking agent or curing catalyst for a self-healing resin layer, in addition to a thermosetting resin and a curing agent or curing catalyst thereof. This curing agent, cross-linking agent or curing catalyst is used in curing of the self-healing resin of the self-healing resin layer in a lower layer thereof. When the self-healing layer contains two components or more, a curing agent, cross-linking agent or curing catalyst that reacts with one or more components thereof is previously added to the thermosetting resin layer. The amount of the curing agent, cross-linking agent or curing catalyst added is 10 parts by weight or less based on the thermosetting resin layer.

As the self-healing resin used in the self-healing resin layer according to the invention, any resin that shows flowability at high temperature like thermoplastic resins can be used. The self-healing resin includes butyral resins, phenoxy resins. The phenoxy resins include bisphenol A and bisphenol S phenoxy resins. The thermoplastic resins in which a bisphenol A epoxy resin is added to these phenoxy resins are also acceptable. This self-healing resin shows flowability under heating, flows in the defects generated in the thermosetting resin layer in the upper layer thereof, and cures by reacting with the curing agent, cross-linking agent or curing catalyst contained in the thermosetting resin layer, to heal the thermosetting resin layer.

The barrier layer according to the invention is provided for the purpose of suppressing the diffusion of the curing agent of the thermosetting resin layer into the self-healing resin layer, for example, at ordinary temperature or low temperature (for example, 100°C or lower).

Any material is acceptable so long as it suppresses diffusion of the curing agent. Since a curing agent generally has large polarity, non-polar material incompatible therewith is particularly preferable. The barrier layer includes polyethylene resins, polypropylene resins, polystyrene resins and the like. When a surfactant such as polyethylene glycol or polyvinyl alcohol in preparation of the self-healing resin layer is used, a barrier layer is voluntarily formed. The thickness of the barrier layer is preferably 1 to 5 µm. This thickness is a thickness that can be coated by one application process.

When the self-healing resin layer contains an epoxy resin, amine catalysts, acid anhydrides, imidazole and the like can be used as the curing agent according to the invention. When the self-healing resin layer is a phenoxy resin, latent curing agents and the like can be used. The amine- catalyst includes meta-xylene diamine, trimethyl hexamethylene diamine and the like, and the imidazole includes 2-phenyl imidazole, diazabicyclo-undecene and the like. The acid anhydride includes tetrahydrophthalic anhydride, hexahydrophthalic anhydride, and the like. The latent curing agent includes blocked isocyanates, aromatic sulfonium salts, and the like. The former is converted to a curing agent by heat, and the latter is converted to a curing agent by light.

The self-fusing insulated wire according to the invention is a self-fusing wire having an insulation film, wherein an enamel layer is provided on the surface of copper wire, and a self-fusing layer is provided on the enamel layer. The enamel layer is formed by applying and calcining a polyester imide varnish or a polyamide imide varnish.

Examples of the electric equipment in which the self-fusing insulated wire according to the invention is used include electronic equipment such as a cell phone equipped with a speaker voice coil, household electric product such as a refrigerator and washing machine equipped with a household motor such as a compressor motor, furthermore, electric power equipment such as an electric transformer, an industrial motor and rotary motor for wind power generator, and an electric motor for automobile.

Particularly, in electric power equipment using a winding wire, usage environment is severe, thus there is an urgent need to respond to self-healing of cracks in a self-fusing insulated wire. Specifically, crack generation by an electric transformer and vibration of a rotary motor for power generator is a major problem such that leads directly to product lifetime. Furthermore, these electric power equipment are expected as one of applied fields of self-healing resin materials since service place is not in the environment where operation such as heal can be easily made, such as the mountain zone, oceanic zone, and further, outer space, thus lifetime improvement of the product is most expected.

Next, specific examples of the self-healing laminated structure according to the invention and the self-fusing insulated wire using the same will be described, but the scope of the invention is not limited to these examples.

### (Example 1: not within the scope of the invention)

A self-healing laminated structure shown in FIG. 1 will be described. As a base material 1, a glass base material with a size of 20 mm × 40 mm and a thickness of 1 mm was used. As a thermosetting resin layer 2, a bisphenol A epoxy resin (manufactured by Japan Epoxy Resin, grade name "1001") was used. As a self-healing resin layer 3, a blended resin of a phenoxy resin (YP-55: manufactured by Tohto Kasei) and a bisphenol A epoxy resin (manufactured by Japan Epoxy Resin, grade name "1001") was used.

As a thermosetting resin varnish forming a top coat, a bisphenol A epoxy resin as a main component, methylhexahydrophthalic anhydride (HN-5500, manufactured by Hitachi Chemicals) that was a curing agent, and an imidazole curing catalyst (P-200, manufactured by Japan Epoxy Resin) of a catalyst were used. Seventy-two parts by weight, 26 parts by weight and 2 parts by weight thereof, respectively, were added to tetrahydrofuran to obtain a thermosetting resin varnish with a solid content concentration of 20%.

As the self-healing resin varnish, a phenoxy resin and a bisphenol A epoxy resin were used. Each 50 parts by weight thereof was added to tetrahydrofuran to obtain a self-healing resin varnish with a solid content concentration of 20%. The imidazole curing catalyst serves as a curing agent of the self-healing resin.

The glass base material surface was washed with acetone, and after drying, the self-healing resin varnish was applied with a bar coater. The solvent was air-dried at room temperature, and then completely removed at 150°C over 1 hour, whereby a self-healing resin layer with a film thickness of about 40 µm was prepared.

The thermosetting resin varnish was applied on the self-healing resin layer prepared above with a bar coater. The solvent was air-dried at room temperature, and then completely removed at 150°C over 2 hours, and simultaneously the curing reaction of epoxy resin was terminated, whereby a thermosetting resin top coat with a film thickness of about 40 µm was prepared, to obtain a self-healing laminated structure A.

As an even remoter comparative example, a laminated structure including a glass base material 1 and a thermosetting resin layer 2 shown in FIG. 4 was prepared. The thermosetting resin varnish of Example 1 was used for preparing the thermosetting resin layer 2, to obtain a laminated structure A.

Against the self-healing laminated structure A and the laminated structure A, a razor manufactured by Feather Safety Razor Co., LTD. (high stainless double edge blade, thickness of 0.1 mm) was vertically pressed on the surface of the laminated structure to make a cut trace 7 on each laminated structure. FIG. 6A shows a schematic view of a cross section of the self-healing laminated structure A after cutting, and FIG. 6B shows a schematic view of a cross section of the laminated structure A after cutting. The conditions of these cut traces 7 can be easily observed under a stereoscopic microscope. Since the base material of these laminated structures is a glass base material, the laminated structures can be observed also under a transmission microscope.

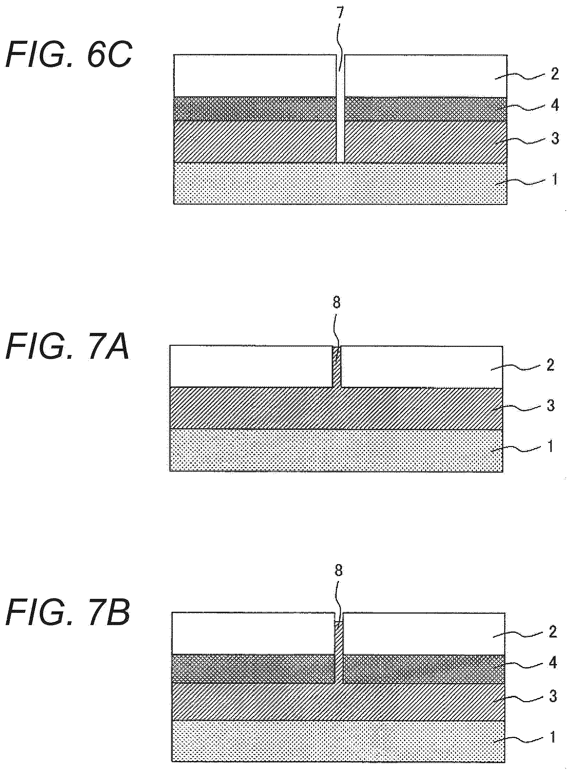

When these self-healing laminated structure A and laminated structure A after cutting were left at 160°C for 5 minutes and observed under a stereoscopic microscope, the form in FIG. 6B was almost maintained in the laminated structure A while the interval of right and left cross sections of the cut traces was slightly narrow. On the other hand, in the self-healing laminated structure A, the form was changed to a form where the cut trace of the thermosetting resin layer 2 was embedded with flow of the self-healing resin as shown in FIG. 7A. Naturally, the cut trace of a self-healing resin layer 3 could not be distinguished. It is presumed that imidazole in the thermosetting resin layer served as a cross-linking agent or curing agent of the self-healing resin.

In the present example, the blended resin of a phenoxy resin and a bisphenol A epoxy resin is used in the self-healing resin layer, and the rate of parts by weight thereof is selected since the blended resin melts flown at 160°C. When the self-healing temperature is set at 160°C or lower, the part by weight of the epoxy resin should be increased. On the contrary, when the self-healing temperature is set at 160°C or higher, the part by weight of the phenoxy resin should be increased. These are also a benefit when using a blended resin. Even when a single thermoplastic resin having a fixed melt flow temperature is directly used, a similar self-healing is achieved. For example, when a thermoplastic resin such as a butyral resin or a polyamide resin is used, it is possible to achieve self-healing at a set temperature according to the used thermoplastic resin. As described above, in the self-healing laminated structure of the invention, it is also characterized in that the self-healing temperature can be arbitrarily set.

In the present example, self-healing of vertical cut on the surface of the self-healing laminated structure has been described, and naturally, it is obvious that it can respond also to the separation between the thermoplastic resin layer and the self-healing resin layer.

While the resin of the thermosetting resin layer is limited to an epoxy resin in the present example, it is also obvious that similar self-healing effect is obtained even when using the thermosetting resin such as urea resin, melamine resin, phenol resin, and unsaturated polyester resin.

In addition, it is obvious that the self-healing effect is obtained even when the thermosetting resin layer and the self-healing resin layer contain an additive material such as a glass fiber and an alumina filler, not only resin components.

### (Example 2)

A self-healing laminated structure shown in FIG. 2 will be described. As a base material 1, an aluminum base material with a size of 20 mm × 40 mm and a thickness of 1 mm was used. As a thermosetting resin layer 2, a bisphenol A epoxy resin (manufactured by Japan Epoxy Resin, grade name "1001") was used.

As a self-healing resin layer 3, a blended resin of a phenoxy resin (YP-55: manufactured by Tohto Kasei) and a bisphenol A epoxy resin (manufactured by Japan Epoxy Resin, grade name "1001") was used. As a barrier layer, a cycloolefin polymer resin (manufactured by ZEON CORPORATION, Zeonex 480) was used.

As a thermosetting resin varnish, a bisphenol A epoxy resin as a main component, methylhexahydrophthalic anhydride (HN-5500, manufactured by Hitachi Chemicals) that was a curing agent, an imidazole curing catalyst (P-200, manufactured by Japan Epoxy Resin) as a catalyst, and a stabilized isocyanate (manufactured by showa Denko, Karenz MOI-BM) as a curing agent of the self-healing resin were used. Sixty-eight parts by weight, 25 parts by weight, 2 parts by weight and 5 parts by weight thereof, respectively, were added to tetrahydrofuran to obtain a thermosetting resin varnish with a solid content concentration of 20%.

As the self-healing resin varnish, a phenoxy resin and a bisphenol A epoxy resin were used. Seventy parts by weight and 30 parts by weight thereof, respectively, were added to tetrahydrofuran to obtain a self-healing resin varnish with a solid content concentration of 20%.

As a varnish for the barrier layer, a cycloolefin polymer resin was added to toluene to obtain a varnish for the barrier layer with a solid content concentration of 5%.

The aluminum base material surface was washed with acetone, and after drying, the self-healing resin varnish was applied with a bar coater. The solvent was air-dried at room temperature, and then completely removed at 150°C over 1 hour, whereby a self-healing resin layer with a film thickness of about 40 µm was prepared.

The varnish for the barrier layer was applied on the self-healing resin layer prepared above with a bar coater. The solvent was air-dried at room temperature, and then completely removed at 150°C over 1 hour, whereby a barrier layer with a film thickness of about 5 µm was prepared.

The barrier layer prepared above was irradiated with ultraviolet, then the thermosetting resin varnish was applied on this barrier layer with a bar coater. The ultraviolet was irradiated for improving the adhesion between the barrier layer and the thermosetting resin film. The solvent was air-dried at room temperature, then completely removed at 150°C over 2 hours, and the curing reaction of epoxy resin was terminated, whereby a thermosetting resin layer with a film thickness of about 40 µm was prepared, to obtain a self-healing laminated structure B.

As a comparative example, a laminated structure B including an aluminum base material 1, a self-healing resin layer 3 and a thermosetting resin layer 2 shown in FIG. 1 was prepared. As the self-healing resin layer 3, the self-healing varnish was used, and as the thermosetting resin layer 2, the thermosetting resin varnish was used, and since curing of the thermosetting resin varnish was carried out at 180°C over 4 hours, a stabilized isocyanate to which the thermosetting resin varnish was added was diffused into the self-healing resin varnish, and a phenoxy resin that was a self-healing resin was cured.

Against the self-healing laminated structure B and the laminated structure B, a razor manufactured by Feather Safety Razor Co., LTD. (high stainless double edge blade, thickness of 0.1 mm) was vertically pressed on the surface of the laminated structure to make a cut trace 7 on each laminated structure. FIG. 6C shows a schematic view of a cross section of the self-healing laminated structure B after cutting, and FIG. 6A shows a schematic view of a cross section of the laminated structure B after cutting. The conditions of these cut traces 7 can be easily observed under a stereoscopic microscope.

When the self-healing laminated structure B and the laminated structure B after cutting were left at 180°C for 5 minutes and observed under a stereoscopic microscope, the form in FIG. 6A was almost maintained in the laminated structure B while the interval of right and left cross sections of the cut traces was slightly narrow. It is considered that, this was caused since, in the preparation process of the laminated structure B, curing reaction of the thermosetting resin layer was carried out at 150°C over 4 hours, whereby a stabilized isocyanate contained in the thermosetting resin was diffused into the self-healing resin layer, a phenoxy resin in the self-healing resin layer was crosslinked and cured by the stabilized isocyanate by leaving at 180°C for 5 minutes, to deactivate flowability.

On the other hand, in the self-healing laminated structure B, the form was changed to a form where a cut trace 8 of the thermosetting resin layer 2 was embedded with flow of the self-healing resin as shown in FIG. 7B. However, it was not observed that the self-healing resin flowed to the surface of the thermosetting resin layer. It is presumed that the phenoxy resin was reacted with the stabilized isocyanate contained in the thermosetting resin layer 2 to be cured, to lower flowability.

In the present example, the blended resin of a phenoxy resin (high molecule) and a bisphenol A epoxy resin (low molecule) is used in the self-healing resin layer, and the rate of parts by weight thereof is selected since the blended resin melts flown at 180°C. When the self-healing temperature is set at 180°C or higher, the part by weight of the high molecular weight phenoxy resin should be increased. These are also a benefit when using a blended resin. Even when a single thermoplastic resin having a fixed melt flow temperature is directly used, a similar self-healing is achieved. For example, when a thermoplastic resin such as an unsaturated polyester resin or a modified polyamide resin is used, it is possible to achieve a thermoplastic resin at a set temperature according to the used thermoplastic resin.

In the self-healing laminated structure of the present example, it is characterized in that flow of the self-healing resin penetrates into defects of the thermosetting resin layer (top coat), and is reacted with the curing agent or catalyst present in the thermosetting resin layer in these parts (these are added in excess amounts to the thermosetting resin so as to function as a cross-linking agent or curing agent of the self-healing resin.), to self-heal the defect parts, and also that the flowability of the self-healing resin layer can be adjusted so that the healing part does not protrude from the surface of the thermoplastic resin layer. In addition, a substance that is different from the curing agent or curing catalyst of the thermosetting resin and acts as a curing agent or cross-linking agent of the self-healing resin can be added to the thermosetting resin layer.

While the resin of the thermosetting resin layer is limited to an epoxy resin in the present example, it is also obvious that similar self-healing effect is obtained even when using the thermosetting resin such as urea resin, melamine resin, phenol resin, and unsaturated polyester resin.

In addition, it is obvious that the self-healing effect is obtained even when the thermosetting resin layer and the self-healing resin layer contain an additive material such as a glass fiber and an alumina filler, not only resin components.

In the present example, the barrier layer applied a varnish for the barrier layer obtained by adding a cycloolefin polymer resin to toluene. However, when a cycloolefin polymer resin is dissolved in tetrahydrofuran in preparing a self-healing resin varnish, a cycloolefin polymer is phase-separated on the surface of the self-healing resin layer in preparing a self-healing resin layer. Therefore, a method for voluntarily forming a barrier layer can be also used, and a self-healing effect similar to the present example is obtained.

Hereinbelow, the combinations of a self-healing resin and a cross-linking agent are shown.

In the case of an epoxy resin, a stabilized isocyanate can be used (described in Examples).

In the case of a urea resin (urea resin + hydrazodicarbonamide), a stabilized isocyanate can be used.

In the case of a melamine resin (melamine resin + hydrazodicarbonamide), a stabilized isocyanate can be used.

In the case of a phenol resin (a curing agent is not necessary for a resol-type phenol resin), a stabilized isocyanate can be used.

In the case of an unsaturated polyester resin (unsaturated polyester resin + organic peroxide), a stabilized isocyanate can be used.

The above cross-linking agent is necessary to be added to the resin composition on which a top coat is to be formed.

### (Example 3: not within the scope of the invention)

A self-fusing insulated wire shown in FIG. 3 will be described. As a base material, a polyamide imide enameled wire was used. The thickness of the polyamide imide film to be an insulation film 6 was 10 µm, and the conductor diameter of a copper wire to be a conductor 5 was φ 0.8 mm. As a thermosetting resin layer 2, a phenoxy resin (YP-50: manufactured by Tohto Kasei) was used. As a self-healing resin layer 3, a blended resin of a phenoxy resin (YP-55: manufactured by Tohto Kasei) and a bisphenol A epoxy resin (manufactured by Japan Epoxy Resin, grade name "1001") was used.

As a thermosetting resin varnish, a phenoxy resin as a main component and a stabilized isocyanate (manufactured by showa Denko, Karenz MOI-BP) that was a cross-linking curing agent were used. Eighty parts by weight and 20 parts by weight thereof, respectively, were added to tetrahydrofuran to obtain a thermosetting resin varnish with a solid content concentration of 20%.

As the self-healing resin varnish, a phenoxy resin and a bisphenol A epoxy resin were used. Eighty parts by weight and 20 parts by weight thereof, respectively, were added to tetrahydrofuran to obtain a self-healing resin varnish with a solid content concentration of 20%.

The self-healing resin varnish was applied and burned on the polyamide imide enameled wire, whereby a self-healing resin layer with a film thickness of about 30 µm was prepared. Furthermore, the thermosetting resin varnish was applied and burned on the self-healing resin layer, whereby a thermosetting resin layer with a film thickness of about 40 µm was prepared, to obtain a self-fusing insulated wire C.

Before curing a top coat 2 of the outermost layer of the thermosetting resin, this top coat has a self-fusing property. Moreover, the self-fusing insulated wire was formed into a coil or the like, and then the top coat is fused and cured. Thereafter, a part of the self-healing resin 6 is flown into the defects generated on the top coat under a certain heating temperature, and reacted with a cross-linking agent, curing agent or curing catalyst present in the top coat 2 to heal the defect part and convert to a thermosetting resin.

As an even remoter comparative example, a self-fusing insulated wire D including a polyamide imide enameled wire including a conductor 5 and an insulation film 6 and a thermosetting resin layer 2 shown in FIG. 5 was prepared. The above thermosetting resin varnish was used for preparing a thermosetting resin layer 2, to obtain a self-fusing insulated wire D.

In the self-fusing insulated wire C and the self-fusing insulated wire D, cracks were forced to be generated on a thermosetting fusing film provided on the outer periphery of the insulated conductor by bending operation.

When the self-fusing insulated wire C and self-fusing insulated wire D after generating these cracks were left at 180°C for 5 minutes and observed under a stereoscopic microscope, in the self-fusing insulated wire D, the cracks could be clearly observed. On the other hand, in the self-fusing insulated wire C, the crack portions were observed in the state of being embedded with flow of the self-healing resin in the self-healing resin layer.

Although the present example is not a self-fusing insulated wire provided with a barrier layer, as shown in Example 2, when the varnish for the barrier layer with a solid content concentration of 5% obtained by adding a cycloolefin polymer resin to toluene is used, it is possible to cure the self-healing resin at the crack portions and suppress flowing. In this case, a stabilized isocyanate that is a cross-linking curing agent of the phenoxy resin should be added to the thermosetting resin layer in a slightly excessive amount more than equivalence relation.

In addition, an amine-based curing agent to the bisphenol A epoxy resin may be added to the thermosetting resin layer. It is obvious that both have an effect of curing the self-healing resin at the crack portions and suppressing the flow thereof.

In the present examples, the blended resin of the phenoxy resin and the bisphenol A epoxy resin are used for the self-healing resin layer, and the rate of parts by weight thereof is selected since the blended resin melts flown at a set temperature. In the self-fusing insulated wire of the invention, it is characterized in that the self-healing temperature can be arbitrarily set. When the blended resin of the phenoxy resin and the bisphenol A epoxy resin melt flown at the operating temperature of the electric product using this self-fusing insulated wire is used, electric product such as an electric transformer that can respond to the crack due to vibration and can respond to lifetime improvement, a motor for power generation, and a drive motor for automobile can be provided.

### (Example 4: not within the scope of the invention)

The self-healing laminated structure shown in FIG. 1 will be described. As a base material 1, a glass base material with a size of 20 mm × 40 mm and a thickness of 1 mm was used. As a thermosetting resin layer 2, a bisphenol A epoxy resin (manufactured by Japan Epoxy Resin, grade name "1001") was used. As a self-healing resin layer 3, a polyvinyl butyral resin (BM-1: manufactured by SEKISUI CHEMICAL CO., LTD.) was used.

As a thermosetting resin varnish, a bisphenol A epoxy resin as a main component, methylhexahydrophthalic anhydride (HN-5500, manufactured by Hitachi Chemicals) that was a curing agent, an imidazole curing catalyst (P-200, manufactured by Japan Epoxy Resin) as a catalyst, and a stabilized isocyanate (manufactured by showa Denko, Karenz MOI-BM) as a curing agent of the self-healing resin were used. Sixty-eight parts by weight, 25 parts by weight, 2 parts by weight and 5 parts by weight thereof, respectively, were added to tetrahydrofuran to obtain a thermoplastic resin varnish with a solid content concentration of 20%.

As the self-healing resin varnish, a polyvinyl butyral resin was used. The polyvinyl butyral resin was added to isopropanol to obtain a self-healing resin varnish with a solid content concentration of 20%.

The glass base material surface was washed with acetone, and after drying, the self-healing resin varnish was applied with a bar coater. The solvent was air-dried at room temperature, and then completely removed at 80°C over 1 hour, whereby a self-healing resin layer with a film thickness of about 40 µm was prepared.

The thermosetting resin varnish was applied on the self-healing resin layer prepared above with a bar coater. The solvent was air-dried at room temperature, and then completely removed at 150°C over 2 hours, and simultaneously the curing reaction of epoxy resin was terminated, whereby a thermosetting resin layer with a film thickness of about 40 µm was prepared, to obtain a self-healing laminated structure A.

As an even remoter comparative example, a laminated structure including a glass base material 1 and a thermosetting resin layer 2 shown in FIG. 4 was prepared. The thermosetting resin varnish was used for preparing the thermosetting resin layer 2, to obtain a laminated structure A.

Against the self-healing laminated structure A and the laminated structure A, a razor manufactured by Feather Safety Razor Co., LTD. (high stainless double edge blade, thickness of 0.1 mm) was vertically pressed on the surface of the laminated structure, to make a cut trace 7 on each laminated structure. FIG. 6A shows a schematic view of a cross section of the self-healing laminated structure A after cutting, and FIG. 6B shows a schematic view of a cross section of the laminated structure A after cutting. The conditions of these cut traces 7 can be easily observed under a stereoscopic microscope. Since the base material of these laminated structures is a glass base material, the laminated structures can be observed also under a transmission microscope.

When the self-healing laminated structure A and laminated structure A after cutting were left at 100°C for 5 minutes and observed under a stereoscopic microscope, the form in FIG. 6B was almost maintained in the laminated structure A while the interval of right and left cross sections of the cut traces was slightly narrow. On the other hand, in the self-healing laminated structure A, the form was changed to a form where the cut trace of the thermosetting resin layer 2 was embedded with flow of the self-healing resin as shown in FIG. 7A. Naturally, the cut trace of a self-healing resin layer 3 could not be distinguished.

In the present example, self-healing of vertical cut on the surface of the self-healing laminated structure has been described, and naturally, it is obvious that it can respond also to the separation between the thermoplastic resin layer and the self-healing resin layer.

While the resin of the thermosetting resin layer is limited to an epoxy resin in the present example, it is also obvious that similar self-healing effect is obtained even when using the thermosetting resin such as urea resin, melamine resin, phenol resin, and unsaturated polyester resin.

In addition, it is obvious that the self-healing effect is obtained even when the thermosetting resin layer and the self-healing resin layer contain an additive material such as a glass fiber and an alumina filler, not only resin components.

### (Example 5: not within the scope of the invention)

A self-healing laminated structure shown in FIG. 1 will be described. As a base material 1, a glass base material with a size of 20 mm × 40 mm and a thickness of 1 mm was used. As a thermosetting resin layer 2, a thermosetting acrylate resin (manufactured by Mitsui Chemicals, Inc.) was used. As a self-healing resin layer 3, a blended resin of a phenoxy resin (YP-55: manufactured by Tohto Kasei) and a bisphenol A epoxy resin (manufactured by Japan Epoxy Resin, grade name "1001") was used.

As a thermosetting resin varnish, a thermosetting acrylate resin as a main component, isophorone diisocyanate (manufactured by Bayer Holding Ltd.) that was a curing agent, and a stabilized isocyanate (manufactured by showa Denko, Karenz MOI-BM) as a curing agent of the self-healing resin were used. Seventy-two parts by weight, 26 parts by weight and 2 parts by weight thereof, respectively, were added to methyl ethyl ketone to obtain a thermosetting resin varnish with a solid content concentration of 20%.

As the self-healing resin varnish, a phenoxy resin and a bisphenol A epoxy resin were used. Each 50 parts by weight thereof was added to tetrahydrofuran to obtain a self-healing resin varnish with a solid content concentration of 20%.

The glass base material surface was washed with acetone, and after drying, the self-healing resin varnish was applied with a bar coater. The solvent was air-dried at room temperature, and then completely removed at 150°C over 1 hour, whereby a self-healing resin layer with a film thickness of about 40 µm was prepared.

The thermosetting resin varnish was applied on the self-healing resin layer prepared above with a bar coater. The solvent was air-dried at room temperature, and then completely removed at 120°C over 1 hour, and simultaneously the curing reaction of acrylate resin was terminated, whereby a thermosetting resin layer with a film thickness of about 40 µm was prepared, to obtain a self-healing laminated structure A.

As an even remoter comparative example, a laminated structure including a glass base material 1 and a thermosetting resin layer 2 shown in FIG. 4 was prepared. The thermosetting resin varnish was used for preparing the thermosetting resin layer 2, to obtain a laminated structure A.

Against the self-healing laminated structure A and the laminated structure A, a razor manufactured by Feather Safety Razor Co., LTD. (high stainless blades, thickness of 0.1 mm) was vertically pressed on the surface of the laminated structure, to make a cut trace 7 on each laminated structure. FIG. 6A shows a schematic view of a cross section of the self-healing laminated structure A after cutting, and FIG. 6B shows a schematic view of a cross section of the laminated structure A after cutting. The conditions of these cut traces 7 can be easily observed under a stereoscopic microscope. Since the base material of these laminated structures is a glass base material, the laminated structures can be observed also under a transmission microscope.

When the self-healing laminated structure A and laminated structure A after cutting were left at 160°C for 5 minutes and observed under a stereoscopic microscope, the form in FIG. 6B was almost maintained in the laminated structure A while the interval of right and left cross sections of the cut traces was slightly narrow. On the other hand, in the self-healing laminated structure A, the form was changed to a form where the cut trace of the thermosetting resin layer 2 was embedded with flow of the self-healing resin as shown in FIG. 7A. Naturally, the cut trace of a self-healing resin layer 3 could not be distinguished.

In the present example, self-healing of vertical cut on the surface of the self-healing laminated structure has been described, and naturally, it is obvious that it can respond also to the separation between the thermoplastic resin layer and the self-healing resin layer.

While isophorone diisocyanate is described as the curing agent of the thermosetting resin layer in the present example, it is also obvious that similar self-healing effect is obtained even when using the curing agent such as tolylene diisocyanate, diphenylmethane diisocyanate, and trimethylhexamethylene diisocyanate.

In addition, it is obvious that the self-healing effect is obtained even when the thermosetting resin layer and the self-healing resin layer contain an additive material such as a glass fiber and an alumina filler, not only resin components.

Although the invention has been specifically described based on the above examples, the invention is not limited to the above examples, and it is obvious that various changes may be made without departing from the scope of the invention.

### Reference Signs List

- 1: base material
- 2: thermosetting resin layer
- 3: self-healing resin layer
- 4: barrier layer
- 5: conductor
- 6: insulation film
- 7: crack
- 8: liquid self-healing resin

## Claims

1. A self-healing laminated structure in which a self-healing resin layer (3) is formed on a base material (1) and a thermosetting resin top coat is formed on an outer layer thereof, wherein the self-healing resin layer (3) comprises an uncured cross-linkable or curable thermoplastic resin, and the thermosetting resin top coat (2) comprises a cross-linking agent, curing agent or curing catalyst of the cross-linkable thermoplastic resin, wherein the cross-linkable or curable thermoplastic resin in a heated state penetrates into defects in the top coat of the thermosetting resin, and is reacted with the cross-linking agent, curing agent or curing catalyst to change into a thermosetting resin, to heal the top coat of the thermosetting resin,
wherein a barrier layer (4) is formed between the thermosetting resin top coat and the self-healing resin layer, and
wherein the uncured thermoplastic resin is a phenoxy resin, a mixture of a phenoxy resin and a bisphenol A epoxy resin, or a butyral resin.

2. The self-healing laminated structure according to claim 1, wherein the thermosetting resin top coat is an acrylate resin.

3. A self-fusing insulated wire in which a self-healing resin layer (3) is formed on a conductor (5) and a self-fusing thermosetting resin top coat (2) is formed on an outer layer thereof, wherein the self-healing resin layer comprises an uncured cross-linkable or curable thermoplastic resin, the cross-linkable thermoplastic resin in a heated state penetrates into defects in the top coat of the thermosetting resin, and is reacted with the cross-linking agent, curing agent or curing catalyst to change into a thermosetting resin, to self-heal the top coat of the thermosetting resin,
wherein a barrier layer (6) is formed between the thermosetting resin top coat and the self-healing resin layer, and
wherein the uncured thermoplastic resin is a phenoxy resin, a mixture of a phenoxy resin and a bisphenol A epoxy resin, or a butyral resin.

4. The self-fusing insulated wire according to claim 3, wherein the thermosetting resin top coat is an acrylate resin.

5. Electric product using the self-fusing insulated wire as defined in any of claims 3 and 4.

## Patentansprüche

1. Selbstheilende Laminatstruktur, bei der eine selbstheilende Harzschicht (3) auf einem Grundmaterial (1) ausgebildet ist und an einer äußeren Schicht eine Deckschicht aus einem duroplastischen Harz gebildet ist, wobei die selbstheilende Harzschicht (3) ein nicht gehärtetes, vernetzbares oder härtbares thermoplastisches Harz umfasst und die Deckschicht (2) aus einem wärmehärtenden Harz ein Vernetzungsmittel, ein Härtungsmittel oder einen Härtungskatalysator für das vernetzbare thermoplastische Harz aufweist, wobei das vernetzbare oder härtbare thermoplastische Harz in erwärmtem Zustand in Schadstellen in der Deckschicht aus duroplastischem Harz eindringt und mit dem Vernetzungsmittel, Härtungsmittel oder Härtungskatalysator reagiert und dadurch ein duroplastisches Harz bildet, um die Deckschicht aus duroplastischem Harz zu reparieren,
wobei zwischen der Deckschicht aus duroplastischem Harz und der selbstheilenden Harzschicht eine Barriereschicht (4) ausgebildet ist, und
wobei es sich bei dem nicht gehärteten thermoplastischen Harz um ein Phenoxyharz, ein Gemisch aus einem Phenoxyharz und einem Bisphenol A-Epoxidharz oder ein Butyralharz handelt.

2. Selbstheilende Laminatstruktur nach Anspruch 1, wobei es sich bei der Deckschicht aus duroplastischem Harz um ein Acrylatharz handelt.

3. Selbstverschmelzender isolierter Draht, bei dem auf einem Leiter (5) eine selbstheilende Harzschicht (3) ausgebildet ist und an einer äußeren Schicht eine selbstverschmelzende Deckschicht (2) aus einem duroplastischen Harz gebildet ist, wobei die selbstheilende Harzschicht ein nicht gehärtetes, vernetzbares oder härtbares thermoplastisches Harz umfasst, das vernetzbare thermoplastische Harz in erwärmtem Zustand in Schadstellen in der Deckschicht aus duroplastischem Harz eindringt und mit dem Vernetzungsmittel, Härtungsmittel oder Härtungskatalysator reagiert und dadurch ein duroplastisches Harz bildet, um die Deckschicht aus duroplastischem Harz zu reparieren,
wobei zwischen der Deckschicht aus duroplastischem Harz und der selbstheilenden Harzschicht eine Barriereschicht (6) ausgebildet ist, und
wobei es sich bei dem nicht gehärteten thermoplastischen Harz um ein Phenoxyharz, ein Gemisch aus einem Phenoxyharz und einem Bisphenol A-Epoxidharz oder ein Butyralharz handelt.

4. Selbstverschmelzender isolierter Draht nach Anspruch 3, wobei es sich bei der Deckschicht aus duroplastischem Harz um ein Acrylatharz handelt.

5. Elektroprodukt, bei dem ein wie in einem der Ansprüche 3 oder 4 definierter selbstverschmelzender isolierter Draht verwendet wird.

## Revendications

1. Structure stratifiée autoréparante dans laquelle une couche de résine autoréparante (3) est formée sur un matériau de base (1) et une couche de finition en résine thermodurcissable est formée sur une couche extérieure de celle-ci, dans laquelle la couche de résine autoréparante (3) comprend une résine thermoplastique réticulable ou durcissable non durcie, et la couche de finition en résine thermodurcissable (2) comprend un agent de réticulation, un agent de durcissement ou un catalyseur de durcissement de la résine thermoplastique réticulable, dans laquelle la résine thermoplastique réticulable ou durcissable dans un état chauffé pénètre dans des défauts de la couche de finition de la résine thermodurcissable, et est mise à réagir avec l'agent de réticulation, l'agent de durcissement ou le catalyseur de durcissement pour se changer en une résine thermodurcissable, pour réparer la couche de finition de la résine thermodurcissable,
dans laquelle une couche barrière (4) est formée entre la couche de finition en résine thermodurcissable et la couche de résine autoréparante, et
dans laquelle la résine thermoplastique non durcie est une résine phénoxy, un mélange d'une résine phénoxy et d'une résine époxy de bisphénol A, ou une résine de butyral.

2. Structure stratifiée autoréparante selon la revendication 1, dans laquelle la couche de finition en résine thermodurcissable est une résine d'acrylate.

3. Fil isolé autofusible dans lequel une couche de résine autoréparante (3) est formée sur un conducteur (5) et une couche de finition en résine thermodurcissable autofusible (2) est formée sur une couche extérieure de celui-ci, dans lequel la couche de résine autoréparante comprend une résine thermoplastique réticulable ou durcissable non durcie, la résine thermoplastique réticulable dans un état chauffé pénètre dans des défauts de la couche de finition de la résine thermodurcissable, et est mise à réagir avec l'agent de réticulation, l'agent de durcissement ou le catalyseur de durcissement pour se changer en une résine thermodurcissable, pour auto-réparer la couche de finition de la résine thermodurcissable,
dans lequel une couche barrière (6) est formée entre la couche de finition en résine thermodurcissable et la couche de résine autoréparante, et
dans lequel la résine thermoplastique non durcie est une résine phénoxy, un mélange d'une résine phénoxy et d'une résine époxy de bisphénol A, ou une résine de butyral.

4. Fil isolé autofusible selon la revendication 3, dans lequel la couche de finition en résine thermodurcissable est une résine d'acrylate.

5. Produit électrique utilisant le fil isolé autofusible tel que défini à l'une quelconque des revendications 3 et 4.
